# FASCICULE DE BREVET EUROPEEN

(11) **EP 0 362 015 B1**
(45) Date de publication et mention de la délivrance du brevet: **28.04.1993**
(21) Numéro de dépôt: 89402528.7
(22) Date de dépôt: 15.09.1989
(51) Int. Cl.: F23J 15/00, B01D 53/34, F23C 6/04

(54) **Procédé pour générer de la chaleur comportant une désulfuration des effluents avec des particules d'absorbant de fine granulométrie en lit transporté**
Verfahren zum Erzeugen von Wärme mit einer Entschwefelung von Abgasen durch Absorptionsmittelteilchen feiner Teilchengrösse in einem Wanderbett
Method for generating heat with desulfurization of effluents using sorbent particles with a fine particle size in an entrained bed

(30) Priorité: 20.09.1988 FR 8812363
(43) Date de publication de la demande: 04.04.1990
(73) Titulaire: INSTITUT FRANCAIS DU PETROLE, 92502 Rueil-Malmaison (FR)
(72) Inventeur: Martin, Gérard, F-92500 Rueil-Malmaison (FR); Feugier, Alain, F-78630 Orgeval (FR)

(56) Documents cités:
- EP-A- 0 044 094
- EP-A- 0 137 599
- FR-A- 1 424 831
- FR-A- 2 574 308
- FR-A- 2 609 150

## Description

L'invention a pour objet un procédé pour générer de la chaleur à partir de la combustion d'un combustible à hautes teneurs en soufre et en azote, avec des émissions réduites d'oxydes de soufre, d'oxydes d'azote et de composés combustibles imbrûlés.

Les réglementations sévères limitant dans les zones protégées les émissions d'oxydes de soufre par les effluents gazeux des générateurs de chaleur y interdisent l'emploi de combustibles à haute teneur en soufre, qui, par ailleurs, peuvent présenter des avantages économiques certains : il en est ainsi de certains charbons s'apparentant aux lignites, et de résidus pétroliers issus des procédés de raffinage.

Il est connu selon le brevet français FR-A-2.609.150 de réduire les émissions d'oxydes de soufre et particulièrement celles de dioxyde de soufre provenant d'un générateur de chaleur acceptant des combustibles à haute teneur en soufre. Il est en effet utilisé la combinaison de trois éléments principaux, formant un ensemble compact, une chambre de combustion de préférence à parois froides, une chaudière de récupération captant la chaleur sensible des gaz de combustion et un lit circulant intermédiaire sans surface d'échange interne notable et dont la fonction est de désulfurer les gaz transitant entre le foyer amont et l'échangeur aval.

Cependant le générateur de chaleur autodésulfurant à lit circulant pose un certain nombre de problèmes technologiques ; sa fiabilité est étroitement liée à la résistance des faisceaux d'échange thermique, aux phénomènes d'abrasion et de corrosion. Par ailleurs, le lit circulant implique l'emploi de grosses particules d'absorbant compatible avec l'utilisation de cyclones de taille raisonnable lors de la séparation du mélange gaz - solide avant le recyclage de ces particules dans la zone de désulfuration.

Ces grosses particules présentent de plus l'inconvénient d'effectuer la désulfuration des fumées à des vitesses lentes et de diminuer les taux d'utilisation du calcium ou du magnésium contenu dans l'absorbant.

On a découvert un procédé permettant de remédier aux inconvénients ci-dessus et en particulier permettant d'obtenir des vitesses de désulfuration rapides, et d'accroître le taux d'utilisation de l'absorbant, à un coût moindre.

De manière plus précise, on a découvert un procédé de génération de chaleur avec des émissions réduites d'oxydes de soufre, d'oxydes d'azote et de composés combustibles imbrûlés, dans lequel on effectue une combustion d'un combustible contenant du soufre et de l'azote, dans une zone de combustion comprenant une zone d'échange de chaleur dans laquelle on extrait au moins en partie de la chaleur, et on met en contact des effluents résultant de ladite combustion avec des particules d'un absorbant renfermant au moins un composé basique d'un métal alcalino-terreux dans une zone de désulfuration, le procédé étant caractérisé par les étapes suivantes :
a) on effectue ladite combustion en présence d'un gaz contenant de l'oxygène dans des conditions sensiblement proches de la stoechiométrie de la combustion et on récupère des effluents de combustion à une température comprise entre 700°C et 1100°C,
b) on introduit les effluents de combustion et les particules dans au moins une zone de turbulence en amont de la zone de désulfuration, lesdites particules ayant une granulométrie de 1 à 100 micromètres et une masse volumique comprise entre 500 et 4000 kg/m³,
c) on effectue, dans la zone de désulfuration, une désulfuration desdits effluents, en présence desdites particules, en lit transporté, à une température comprise entre 700°C et 950°C et en atmosphère oxydante dans des conditions telles que la teneur en oxygène à la sortie de la zone de désulfuration soit comprise entre 0,1 et 5 % en volume, lesdits effluents ayant une vitesse superficielle en sortie de la zone de désulfuration comprise de préférence entre 2 et 20 m/s, et on produit un mélange renfermant lesdites particules comprenant des composés soufrés de désulfuration et un effluent gazeux désulfuré,
d) on envoie ledit mélange dans une zone de récupération de chaleur et on extrait au moins une partie de la chaleur dudit mélange,
e) on sépare le mélange résultant de l'étape d) dans une zone de séparation et on évacue d'une part l'effluent gazeux au moins en partie refroidi et débarrassé de la majeure partie des oxydes de soufre, des oxydes d'azote et du combustible imbrûlé, et d'autre part lesdites particules d'absorbant comprenant lesdits composés soufrés.

Le découplage complet de la combustion et de la désulfuration se réalisant dans deux enceintes distinctes, permet d'optimiser séparément chacune des deux fonctions. En effet, la combustion se réalise sous très faible excès d'air, voire en défaut d'air, en général entre 90 et 110 % de la stoechiométrie de la combustion et avantageusement entre 96 et 104 % de la stoechiométrie. On réduit ainsi la production d'oxydes d'azote aux dépens d'une quantité accrue de produits combustibles imbrûlés qui seront brûlés dans la zone de désulfuration.

Les particules d'absorbant sont en général fraiches.

L'utilisation d'absorbant, se présentant sous la forme de grains fins, avantageusement compris entre 5 et 25 micromètres, permet l'obtention de vitesses de désulfuration élevées et l'augmentation du taux d'utilisation du calcium ou du magnésium contenu dans l'absorbant. C'est pourquoi cet absorbant n'est généralement pas recyclé.

On sait par ailleurs que l'utilisation complète du calcium ou du magnésium n'est pas possible à cause de la formation d'une "croute" de sulfate de calcium ou de magnésium en surface du grain d'absorbant qui empêche les oxydes de soufre de pénétrer complètement au coeur du grain. Le phénomène prend d'autant plus d'importance que le rapport surface extérieure/volume du grain est faible.

Avec une granulométrie, selon l'invention, comprise entre 1 et 100 micromètres, on atteint généralement des taux d'utilisation d'environ 75 %, et d'au moins 85 % avec la granulométrie préférée de 2 à 25 micromètres.

La rapidité des réactions de désulfuration permet de s'affranchir du recyclage des particules, habituellement pratiqué dans les générateurs traditionnels. On peut ainsi gagner en compacité d'installation, en investissement, en fiabilité et en sécurité puisqu'on élimine les possibilités d'incidents sur les circuits de recyclage.

L'efficacité de désulfuration, à durée identique, se trouve être améliorée tout en nécessitant une consommation réduite de calcium (rapport Ca/S de l'ordre de 1 à 1,5 moles de calcium ou de magnésium par mole de soufre présente dans l'effluent).

On peut ainsi produire, dans ces conditions, un produit ayant une forte teneur en sulfate à partir de fines particules d'absorbant telles qu'un produit de cimenterie pris avant cuisson, ce qui rend plus facile son utilisation ultérieure lorsqu'il est incorporé dans certains éléments.

Le procédé présente également l'avantage d'une plus grande insensibilité à la température que les procédés qui utilisent des granulométries d'absorbant plus importantes. En effet, avec des grains d'absorbant à base de carbonates d'un métal alcalino-terreux dont la taille, selon l'art antérieur, dépasse 100 microns, il faut opérer à une température minimale de 850°C pour avoir une vitesse et un rendement de décarbonatation suffisants. Dans le cas présent, la décarbonatation peut être effectuée à une température plus basse, par exemple vers 700°C et les performances globales de désulfuration sont également bonnes. Il s'ensuit une possibilité de récupération d'énergie plus importante dans la chambre de combustion.

Par ailleurs, la séparation des particules de l'effluent désulfuré étant effectuée après l'étape de récupération de chaleur subséquente à l'étape de désulfuration et donc à une température basse (de l'ordre de 120 à 350°C), celle-ci est plus facile (le volume de gaz à traiter étant plus faible).

Enfin, la perte de charge totale de l'installation est plus faible que celle observée avec un lit circulant en raison de l'absence d'une phase dense à la base du réacteur de désulfuration et de l'absence de cyclones, ce qui peut permettre d'envisager un fonctionnement en dépression de l'ensemble de l'installation, chambre de combustion incluse.

Selon une autre caractéristique du procédé selon l'invention, l'étape de désulfuration est effectuée en général avec une concentration de particules dans l'effluent gazeux de combustion et dans le gaz comburant comprise entre 0,02 et 1 Kg/Nm³ de fumées et de gaz et de préférence entre 0,05 et 0,2 Kg/Nm³ (N : normal, c'est-à-dire à 0°C et 1 Atmosphère).

Le temps de séjour des particules dans la zone de désulfuration est en règle générale de 0,5 à 10 s et de préférence de 1 à 2 s.

On peut introduire de l'ammoniac ou de l'urée dans la chambre de désulfuration, de préférence en amont, pour achever si nécessaire la dénitrification des effluents de combustion. De même, on peut rajouter de l'air pour que la désulfuration soit effectuée en atmosphère d'oxygène.

La zone de turbulence, en amont de la chambre de désulfuration, induit une turbulence favorisant le mélange intime des particules et des gaz dans le lit transporté.

Cette zone de turbulence peut être créée par tout moyen connu de l'Homme de métier ; par exemple on peut utiliser des orifices, des venturi, des diaphragmes, un milieu poreux, etc...

Les absorbants les plus fréquemment utilisés sont les calcaires (CaCO₃) ou les dolomies (CaMg(CO₃)₂). On pourra également utiliser des produits de cimenterie pris avant leur cuisson et de fine granulométrie.

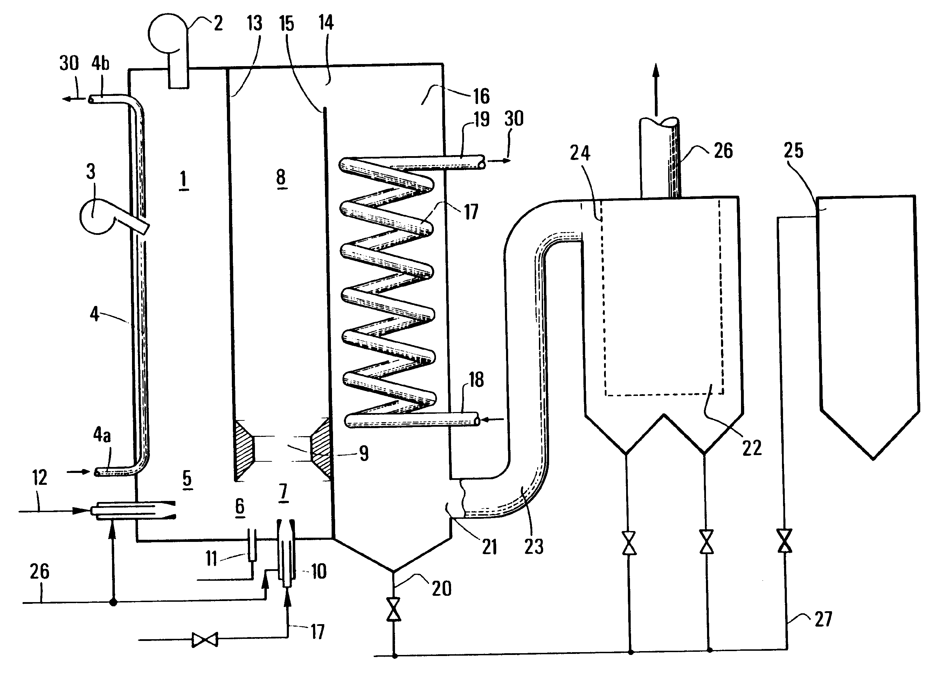

L'invention sera mieux comprise à la lecture de la description qui suit d'un exemple particulier, nullement limitatif, illustré par la figure unique ci-annexée.

Elle représente un dispositif pour la mise en oeuvre du procédé selon l'invention comportant une chambre de combustion 1, allongée de section carrée ou rectangulaire, de préférence verticale, pouvant brûler n'importe quel type de combustible solide ou liquide contenant du soufre et de l'azote, injecté sous forme pulvérisée dans la chambre 1 par un brûleur 2 alimenté en gaz comburant. Ce brûleur est avantageusement disposé selon l'axe de la chambre et à la partie supérieure de celle-ci, et peut être déplacé par des moyens appropriés non représentés sur la figure à l'intérieur de la chambre, selon son axe de façon à réduire si nécessaire le flux thermique. Eventuellement, un brûleur auxiliaire 3 peut être aussi utilisé pour moduler la puissance transmise aux surfaces d'échanges.

Ce combustible peut être un résidu sous vide, un asphalte fluxé, des combustibles solides, des combustibles composites fuel/charbon, des suspensions charbon/eau, etc. Trois des quatre faces verticales peuvent être revêtues de tubes 4 d'échange de chaleur dont l'entrée 4a est alimentée en eau et la sortie 4b recueille l'eau et la vapeur dirigées vers une capacité ou ballon sous pression 30 (non représenté). La vapeur est ensuite envoyée vers son utilisation (turbine, réseau de chauffage, etc...).

Le combustible est brûlé sans excès d'air, afin de réduire au maximum la formation d'oxydes d'azote. Au cours de la combustion, on préleve une partie de l'énergie libérée par les tubes 4 d'échange afin que la température des effluents gazeux de combustion se situe entre 700°C et 1100°C. Ces derniers quittent la sortie 5 à l'extrêmité inférieure de cette chambre et circulent à travers un passage 6 avant d'atteindre l'entrée 7 d'une chambre de désulfuration 8 dont les parois sont en céramique.

Disposé dans le passage, un injecteur 10 introduit des particules d'absorbant frais ou des gouttelettes dans le cas d'une suspension, du calcaire par exemple, dans la chambre de désulfuration. Ces particules, de granulométrie centrée autour de 15 micromètres, circulent à co-courant avec les effluents de combustion. En sortie de la chambre, ces derniers, désulfurés, sont animés d'une vitesse de 2 à 20 m/s. Le débit des particules est tel qu'il conduit à des concentrations comprises entre 0,05 et 0,2 kg par m³ normal de gaz.

Dans le passage 6 peut également être adjoint un injecteur d'ammoniac 12 alimentant la chambre 8 dans la direction de l'écoulement pour compléter la dénitrification des effluents, les oxydes d'azote étant transformés en azote moléculaire.

Les deux injecteurs fonctionnent avec de l'air comprimé ou de la vapeur, apporté par les lignes 26, afin d'assurer une bonne dispersion spatiale de l'absorbant ou de l'ammoniac.

Dans le cas de l'utilisation de vapeur pour les injecteurs ou si l'air utilisé pour la dispersion par les différents injecteurs n'est pas suffisant pour assurer une combustion complète des composés combustibles imbrûlés, on peut envisager une injection complémentaire dans le même passage 6 par un injecteur d'air 11.

Tous ces injecteurs sont avantageusement situés en amont d'un venturi 9, bien qu'au moins un de ceux-ci, disposé dans le venturi même ou en aval de celui-ci, ne soit pas à exclure.

L'entrée de la chambre 8 de désulfuration comprend le venturi 9 adapté à induire de la turbulence au flux de particules et de gaz traversant cette entrée et à favoriser leur mélange.

La chambre de désulfuration, de forme allongée et de section carrée ou rectangulaire, dans laquelle remonte le mélange de particules et d'effluents gazeux est adjacente à la chambre de combustion. Leur paroi commune 13 n'est pas refroidie.

La température du lit de particules ainsi constitué ou lit transporté est maintenue entre 700 et 950°C. Cette chambre est sensiblement adiabatique et la désulfuration des effluents est effectuée durant leur séjour dans la chambre de désulfuration, les oxydes de soufre, SO₂ en particulier, étant transformés en sulfate. Le temps de séjour est par exemple d'environ 2 s.

Les effluents désulfurés et les particules d'absorbant quittent la chambre de désulfuration par une sortie 14 à l'extrémité de cette chambre et sont dirigés vers une chambre de récupération 16 de chaleur adjacente à la précédente. La paroi commune aux deux chambres comprend à son extrémité supérieure 15 un orifice de sortie 14 par lequel s'effectue le passage des particules et des gaz. Cette paroi est dépourvue de moyens pour extraire de la chaleur.

La chambre de récupération de chaleur 16, de forme allongée et de section carrée ou rectangulaire, dans laquelle descend le mélange, comprend des tubes échangeur de chaleur 17 disposés par exemple selon un tracé sinueux le long de l'axe de la chambre 16. Ces tubes sont alimentés en eau en 18 et ils ont une sortie 19 d'eau et de vapeur communiquant avec une capacité sous pression 30. L'agencement des tubes est tel que la température du mélange solides-gaz quittant la chambre 16 se situe entre 120°C et 350°C.

A la base de la chambre 16 se trouve un dispositif d'extraction 20 de solides permettant de retirer d'éventuels dépôts qui auraient sédimenté à cause de l'abaissement de vitesse de ces solides. Le mélange solide-gaz refroidi quitte la chambre 16 par une sortie 21 à l'extrémité inférieure de celle-ci et est séparé dans une chambre de séparation 22 reliée à la sortie 21 par une ligne de transfert 23. Cette chambre 22 comprend par exemple un filtre à manches 24 par lequel les particules d'absorbant usagé, à base de sulfates, sont recueillies et les gaz effluents dépoussiérés et débarrassés de la majeure partie des oxydes de soufre et d'azote, rejetés à l'atmosphère par une ligne 26 reliée à la partie supérieure de la chambre 22. Les particules sont dirigées vers une trémie de stockage 25 par une ligne 27 reliée à la partie inférieure de la chambre de séparation 22 et éventuellement au dispositif d'extraction 20.

Ainsi, les effluents de combustion, après avoir parcouru selon un cheminement en S les trois chambres 1, 8 et 16 dont celle du milieu 8 est adjacente aux deux autres, se trouvent être très rapidement dépollués.

Si nécessaire, la chambre de désulfuration peut être équipée d'internes destinés à augmenter le temps de séjour des particules d'absorbant et à accroître leur efficacité. Par internes, on entend par exemple des anneaux de Raschig, ou de Pall, empilés dans l'enceinte, des particules de 0,15 à 10 cm de granulométrie supportés par une grille et/ou des aménagements supportés par la paroi de la chambre qui favorisent la turbulence (restrictions de section disposés le long de la chambre par exemple).

## Revendications

1. Procédé de génération de chaleur avec des émissions réduites d'oxydes de soufre, d'oxydes d'azote et de composés combustibles imbrûlés, dans lequel on effectue une combustion d'un combustible contenant du soufre et de l'azote, dans une zone de combustion comprenant une zone d'échange de chaleur dans laquelle on extrait au moins en partie de la chaleur, on met en contact des effluents résultant de ladite combustion dans une zone de désulfuration avec des particules d'un absorbant renfermant au moins un composé basique d'un métal alcalino-terreux, le procédé étant caractérisé par les étapes la suivantes :
a) on effectue ladite combustion en présence d'un gaz contenant de l'oxygène dans des conditions sensiblement proches de la stoechiométrie de la combustion et on récupère des effluents de combustion à une température comprise entre 700°C et 1100°C,
b) on introduit les effluents de combustion et les particules dans au moins une zone de turbulence en amont de la zone de désulfuration, lesdites particules, ayant une granulométrie de 1 à 100 micromètres et une masse volumique comprise entre 500 et 4000 kg/m³.
c) on effectue, dans la zone de désulfuration, une désulfuration desdits effluents, en présence desdites particules, en lit transporté, à une température comprise entre 700°C et 950°C et en atmosphère oxydante dans des conditions telles que la teneur en oxygène à la sortie de la zone de désulfuration soit comprise entre 0,1 et 5 % en volume et on produit un mélange renfermant lesdites particules comprenant des composés soufrés de désulfuration et un effluent gazeux désulfuré,
d) on envoie ledit mélange dans une zone de récupération de chaleur et on extrait au moins en partie de la chaleur,
e) on sépare le mélange résultant de l'étape d) dans une zone de séparation et on évacue d'une part l'effluent gazeux débarrassé de la majeure partie des oxydes de soufre, des oxydes d'azote et des composés combustibles imbrûlés et au moins en partie refroidi, et d'autre part lesdites particules d'absorbant comprenant lesdits composés soufrés.

2. Procédé selon la revendication 1, dans lequel l'étape b) est effectuée avec des concentrations en particules dans le réacteur comprises entre 0,02 et 1 kg/Nm³ et de préférence comprises entre 0,05 et 0,2 kg/Nm³ d'effluents totaux.

3. Procédé selon les revendications 1 ou 2, dans lequel les particules d'absorbant ont une granulométrie comprise entre 5 et 25 micromètres.

4. Procédé selon l'une des revendications 1 à 3, dans lequel le temps de séjour des particules dans la zone de désulfuration est de 0,5 à 10 s et de préférence de 1 à 2 s.

5. Procédé selon l'une des revendications 1 à 4, dans lequel lesdits effluents de combustion ont une vitesse superficielle en sortie de la zone de désulfuration comprise entre 2 et 20 m/s.

## Patentansprüche

1. Verfahren zur Erzeugung von Wärme mit reduzierten Emissionen von Schwefeloxyden, Stickstoffoxyden und Verbindungen unverbrannter Brennstoffe, bei dem man eine Verbrennung eines schwefel- und stickstoffenthaltenden Brennstoffs in einer Verbrennungszone vornimmt, die eine Wärmeaustauscherzone umfasst, in welcher man wenigstens zum Teil Wärme entzieht, aus dieser Verbrennung stammende Abströme in einer Entschwefelungszone mit Partikeln eines Absorptionsmittels kontaktiert, das wenigstens eine basische Verbindung eines Erdalkalimetalls enthält, wobei das Verfahren sich auszeichnet durch die folgenden Stufen:
a) man nimmt diese Verbrennung in Anwesenheit eines Sauerstoff enthaltenden Gases unter Bedingungen vor, die im wesentlichen nahe den stoechiometrischen Verbrennungsbedingungen sind und gewinnt Verbrennungsabströme bei einer Temperatur zwischen 700 und 1100 Grad C,
b) man führt die Verbrennungsabströme und die Partikel in wenigstens eine Turbulenzzone vor der Entschwefelungszone ein, wobei diese Partikel eine Granulometrie von 1 bis 100 Mikrometer und eine volumenbezogene Masse haben, die zwischen 500 und 4000 kg/m³ beträgt.
c) Man führt in der Entschwefelungszone eine Entschwefelung der Abströme in Anwesenheit dieser Partikel im Transportbett bei einer Temperatur durch, die zwischen 700 und 950 Grad C beträgt und in oxidierender Atmosphäre unter Bedingungen derart, daß der Sauerstoffgehalt bei Austritt aus der Entschwefelungszone zwischen 0,1 und 5 Volumenprozent beträgt und man erzeugt ein Gemisch, das diese Partikel enthält, schwefelhaltige Entschwefelungsverbindungen sowie einen entschwefelten gasförmigen Abstrom umfassend,
d) man führt dieses Gemisch in eine Wärmerückgewinnungszone ein und man entzieht wenigstens zum Teil Wärme und
e) man trennt das aus der Stufe d) stammende Gemisch in einer Trennzone und zieht einerseits den gasförmigen Abstrom ab, der vom grösseren Teil der Schwefeloxide, der Stickoxide und der Verbindungen unverbrannter Brennstoffe befreit ist und wenigstens zum Teil gekühlt ist und andererseits diese Absorptionspartikel, welche diese schwefelhaltigen Verbindungen umfassen.

2. Verfahren nach Anspruch 1, bei dem die Stufe b) mit Konzentrationen an Partikeln im Reaktor durchgeführt wird, die zwischen 0,02 und 1 kg/Nm³ und vorzugsweise zwischen 0,05 und 0,2 Rg/Nm³ an Abströmen insgesamt betragen.

3. Verfahren nach einem der Ansprüche 1 oder 2, bei dem die Absorptionspartikel eine Granulometrie zwischen 5 und 25 Mikrometer haben.

4. Verfahren nach einem der Ansprüche 1 bis 3 bei dem die Verweilzeit der Partikel in der Entschwefelungszone zwischen 0,5 bis 10 Sekunden und vorzugsweise zwischen 1 bis 2 Sekunden beträgt.

5. Verfahren nach einem der Ansprüche 1 bis 4, bei dem diese Verbrennungsabströme eine Oberflächengeschwindigkeit am Austritt aus der Entschwefelungszone zwischen 2 und 20 m/Sek. haben.

## Claims

1. A process for the generation of heat with reduced emissions of sulphur oxides, nitrogen oxides and unburned combustible compounds, wherein combustion of a fuel containing sulphur and nitrogen is effected in a combustion zone comprising a heat exchange zone from which at least part of the heat is extracted, the effluents resulting from said combustion are contacted in a desulphuration zone with particles of an absorbent containing at least one basic compound of an alkaline-earth metal, the process being characterised by the following steps:
a) said combustion is carried out in the presence of a gas containing oxygen under conditions which are basically the same as the stoichiometry of the combustion operation, and the combustion effluents are recovered at a temperature of between 700°C and 1100°C,
b) the combustion effluents and the particles are introduced into at least one turbulence zone upstream of the desulphuration zone, said particles having a grain size of 1 to 100 micrometres and a mass per volume unit of between 500 and 4000 kg/m³.
c) in the desulphuration zone, desulphuration of said effluents is carried out in the presence of said particles in transported bed at a temperature of between 700°C and 950°C and in an oxidising atmosphere under conditions such that the oxygen content at the exit from the desulphuration zone is between 0.1 and 5% by volume, and a mixture is produced which contains said particles comprising desulphuration compounds with sulphur and a gaseous effluent from which sulphur has been removed,
d) said mixture is sent to a heat recovery zone, and heat is extracted at least partially,
e) the mixture resulting from step d) is separated in a separation zone, and the gaseous effluent, on the one hand, is removed from which the majority of the sulphur oxides, nitrogen oxides and unburned combustible compounds have been removed, and is at least partially cooled, and, on the other hand, said particles of absorbent are removed which comprise said compounds with sulphur.

2. A process according to Claim 1, wherein step b) is carried out with concentrations of particles in the reactor of between 0.02 and 1 kg/Nm³ and preferably between 0.05 and 0.2 kg/Nm³ of the total effluents.

3. A process according to Claim 1 or Claim 2, wherein the particles of absorbent have a grain size of between 5 and 25 micrometres.

4. A process according to one of Claims 1 to 3, wherein the stay time of the particles in the desulphuration zone is between 0.5 and 10 s, preferably between 1 and 2 s.

5. A process according to one of Claims 1 to 4, wherein said combustion effluents have a superficial speed at the exit from the desulphuration zone of between 2 and 20 m/s.
